# EUROPEAN PATENT SPECIFICATION

(11) **EP 0 588 867 B1**
(45) Date of publication and mention of the grant of the patent: **25.08.1999**
(21) Application number: 92911830.5
(22) Date of filing: 15.06.1992
(51) Int. Cl.: B66B 23/12, G09F 19/22

(54) **ADVERTISING FITTING**
Reklamemontage
ACCESSOIRE PUBLICITAIRE

(30) Priority: 13.06.1991 NZ 238537
(43) Date of publication of application: 30.03.1994
(73) Proprietor: ESCALATOR ADVERTISING LIMITED, Auckland 1001 (NZ)
(72) Inventor: FINDLAY, Alexander, Glendowie, AK 1005 (NZ); BARTLETT, Mark, Remuera, AK 1005 (NZ)
(74) Representative: Jones, Graham H.
(86) International application number: PCT/GB92/01037
(87) International publication number: WO 92/22491

(56) References cited:
- EP-A- 0 283 406
- EP-A- 0 400 250
- WO-A-88/09545
- FR-A- 2 590 060
- US-A- 4 257 515
- US-A- 4 756 398

## Description

This invention relates to the field of advertising and, more especially, this invention relates to an escalator step having means for displaying a sign.

Escalators are a convenient form of transport within multi-level buildings such as department stores, supermarkets, airports and buildings in which some but not all of the floors contain retail outlets. A common difficulty experienced by retailers who are not on the street level of a multi-level building, is that of attracting consumer attention to their shops. At present there appears to be a limited number of ways in which the retailer can inform the potential customer of his/her wherebouts in the building. It is thus very difficult for the retailer to use advertising which is both economical and effective.

Advertising on escalators is known. Such advertising has mainly been concerned with affixing advertising on the hand rail and/or balustrading of an escalator. The application of paint or an adhesively backed sign to the riser and/or tread of an escalator step may have been attempted before. However it would appear that the relative movement between adjacent escalator steps would eventually destroy any exposed sign on the riser and/or tread.

A sign on an escalator step is shown in US-A-4,756,398. The escalator step makes use of a specially formed step, with a tread made of light alloy, and a riser made of a transparent plastics resin. The main purpose of the patent is to display either an "up" arrow or a "down" arrow on the risers. A safety system is shown in US-A-4,257,515 wherein a metal step has been modified to include a coloured stripe the full width of the lower portion of the riser. The coloured stripe is in the form of a nylon insert of contrasting colour to the colour of the riser, and the coloured stripe is approximately 0.5" - 2" in height. The purpose of the coloured stripe is to provide a flashing signal to a person entering the escalator so that they would recognise whether the escalator is moving up or down. The coloured stripe would not be visible for much of journey of the escalator, and it is designed to disappear as the steps merge at the top of the escalator. In JP-A-4710294 there is disclosed an escalator having a plurality of interacting movable steps. Each step has a tread and a riser. The riser of a step may be provided with a sign in the form of an advertising sheet. The arrangement for keeping the sign in place may wear during use.

It is object of the present invention to go at least part way towards providing an escalator step with improved means for advertising or, alternatively, at least to provide the public with a useful choice.

Accordingly, the present invention provides a step for an escalator having a plurality of interacting movable steps each having a defined external profile, said step having a tread, a riser, said defined external profile, a plurality of support members, and means for displaying a sign, characterised in that said means for displaying the sign comprises a receiving portion which is provided in a portion of said step and which has a base, side walls and an open front remote from said base; and a transparent or translucent cover plate which closes the open front of said receiving portion, and which has an external profile corresponding to the defined external profile of said step.

The said receiving portion may be formed on the riser of said step.

The receiving portion may be formed by providing a through hole in said step and then closing said through hole with said base.

The receiving portion may be formed as a machined recess.

The said transparent or translucent cover plate may be removably attached to said step.

The step may include the sign. The sign may be held in place between said base and said transparent or translucent cover plate.

The present invention also provides an escalator having a plurality of interacting movable steps. All of the steps may be the steps of the present invention.

The present invention further provides a method of changing a sign on a step, the method being as defined in the following claims 10-13.

The following is a description of preferred forms of the present invention, given by way of example only, with reference to the accompanying drawings, in which:
- Figure 1:: illustrates a typical step used in an escalator showing a tread and a riser, both with cleated surfaces, and castors for use on escalator rails.
- Figure 2:: illustrates a preferred form of the invention, and shows the machined riser.
- Figure 3:: shows a rear view of an escalator step with machined riser.
- Figure 4:: shows an escalator step in rear view with restored backing plate.
- Figure 5:: illustrates a preferred form of the invention, and shows the restored backing plate on the riser, a sign and a cleated cover plate.
- Figure 5A:: illustrates a front view (exaggerated) of the shape of the cleats on the cover plate.
- Figure 6:: illustrates the machined tread and riser, a sign and a cleated cover plate.
- Figure 7:: illustrates a modified step of a travelator.
- Figure 8:: shows a modified escalator step which has been machined to produce a bevelled surface between the riser and the platform.
- Figure 9A:: is a cross-sectional view of an escalator step and shows a supporting member positioned behind the riser.
- Figure 9B:: is a cross sectional view of a preferred escalator step, showing a strengthed backing plate.
- Figure 9C:: shows a side view (exaggerated) of the interface between the bottom edge of the cover and the bottom edge of the machined riser.
- Figure 10:: illustrates the interface between a pair of escalator steps and shows the complementary cleats of each step.

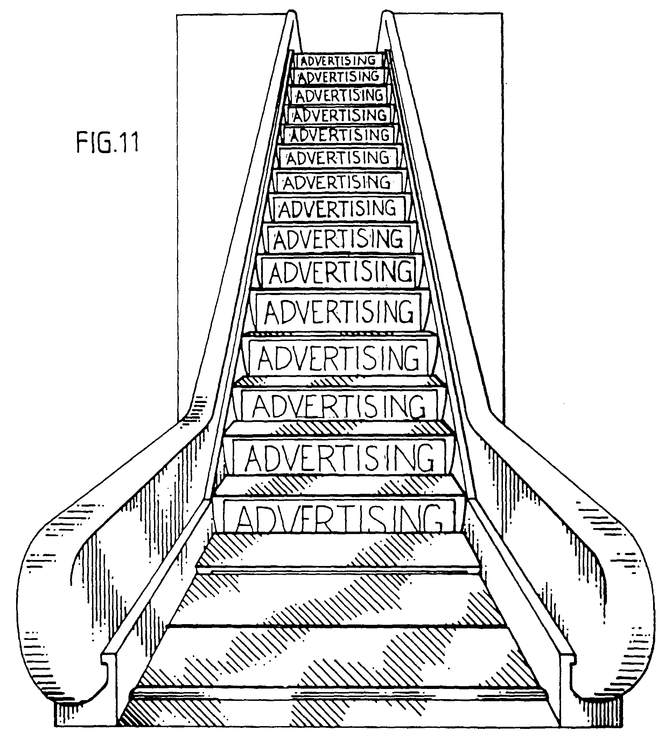

- Figure 11:: illustrates an escalator.
- Figure 12:: illustrates a travelator.
- Figure 13:: illustrates an escalator step and light source.

For the purposes of this description, a typical escalator step will be described, however it will be apparent that a travelator is a similar apparatus to an escalator, having a tread portion but not a riser portion, and will be described under the heading VARIATIONS.

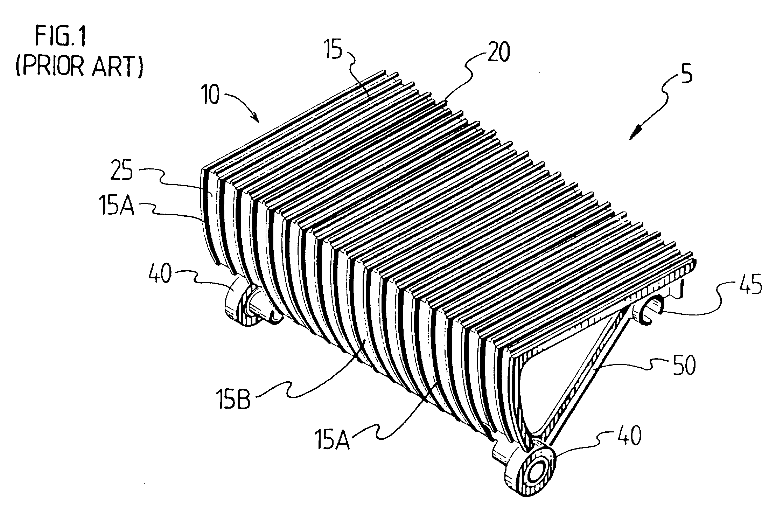

Figure 1 illustrates an isometric view of a typical escalator step 5, which includes a tread 10 having a castellated surface 15 made up of a number of cleats 15A and grooves 15B, the cleats which extend at the rear of the tread to form teeth 20. The front face of the step is normally called the riser 25, and on most modern escalators the riser also has a castellated surface incorporating a number of cleats 15A. Figure 1 shows that the cleats on the nser complement the teeth on the rear of the tread, one of the purposes of this complementary relationship being to prevent objects from falling between the steps while the escalator is moving, thus preventing an object from jamming the relative up and down movements of the steps and the risk of a serious accident occurring.

Each individual step of an escalator is normally constructed as a carriage provided with four castors. Figure 1 shows a bottom pair of castors 40 and the axis 45 for the top pair. It appears that each step is able to at least pivot about the top axis 45.

The top and bottom pair of castors each run on rails (not shown in the drawings), the rails for the top pair being set further outwards than those of the bottom pair. For instance on an upward load bearing run the two rails are situated in the same plane but a short distance before the top (and a short distance past the bottom) of the escalator, the rails are so displaced in relation to one another that the inner rail is below the outer rail.

Figure 1 also shows a triangular supporting member 50, which provides support for the riser and tread. There are a number of these supporting members positioned along the width of the step.

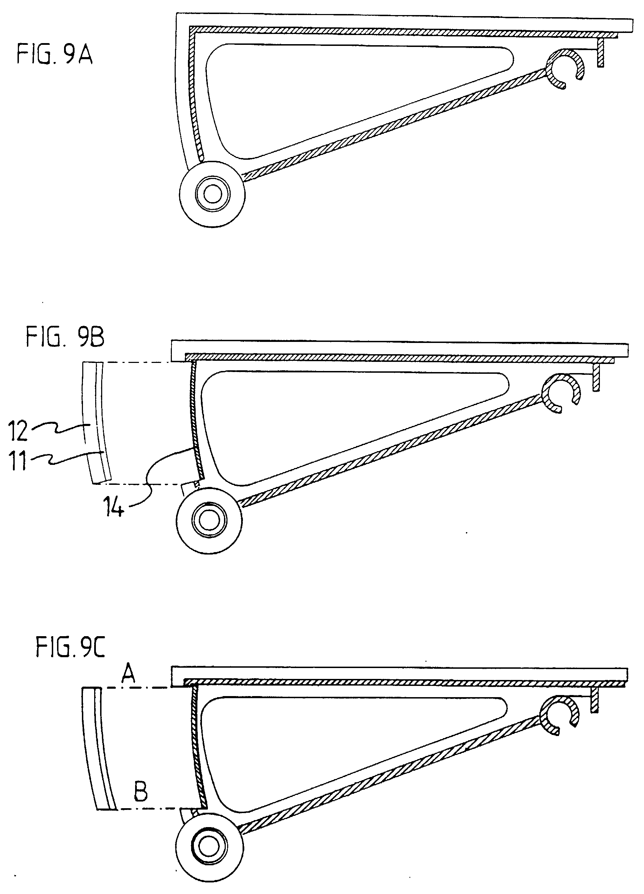

It will also be apparent from figure 1 that the riser is somewhat curved when viewed in vertical cross section, as in figures 9A and 9B. The curved surface allows the step to rise and fall as required, and this up and down movement is a curved motion pivoting about the top axis 45 rather than a movement in a 90° vertical plane.

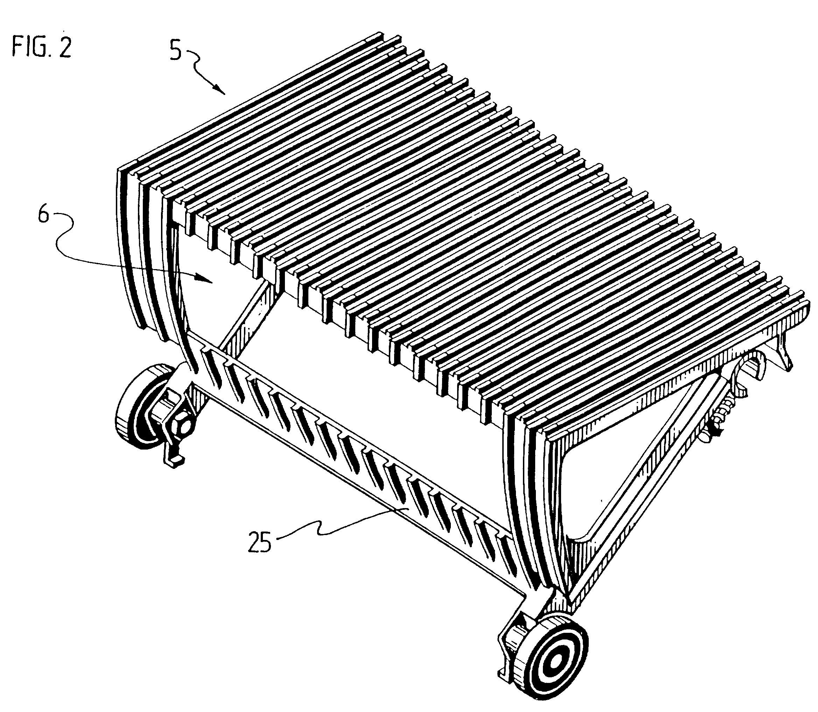

The preferred form of the present invention provides means for advertising using the steps of an escalator. Figure 2 shows an example of the invention in its most preferred form, utilizing the cut-out face of the riser to display indicia such as an advertising sign.

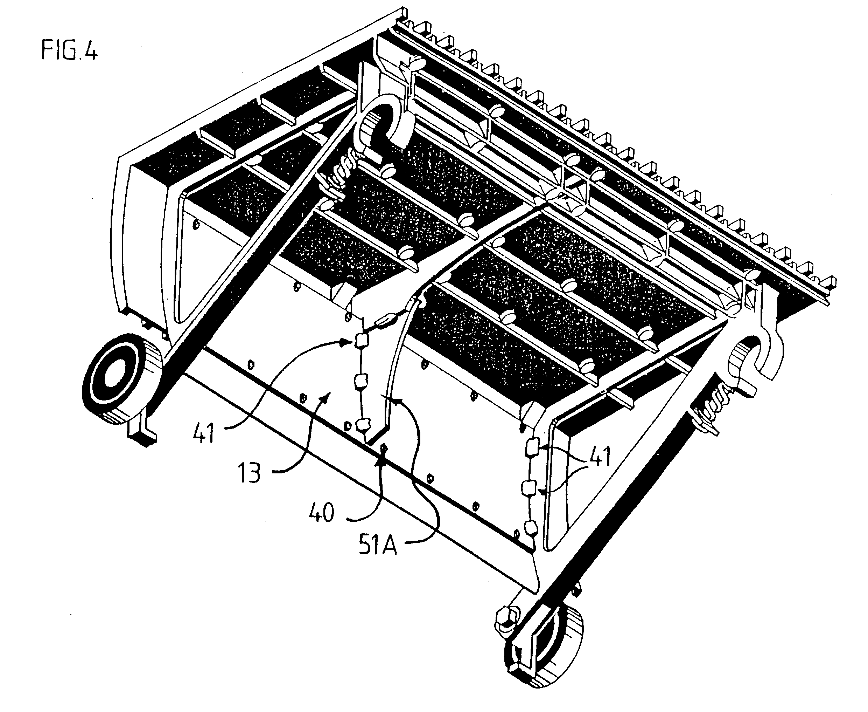

Figure 2 shows an escalator step 5 in this case on OTIS ™ UB step 600 mm in width from which a "window" portion has been cut-away from the riser 25. The thickness of the plate at the base of the cleats is typically quite thin and therefore it is be more preferable to completely cut away a portion of the riser and insert a backing plate to retain strength in the step. The window portion then is preferably restored by using a permanent rear-mounted backing plate 13, as shown in Figure 4, preferably of aluminium material, which both restores the strength of the step and provides a substantially even surface 13A to accommodate a sign.

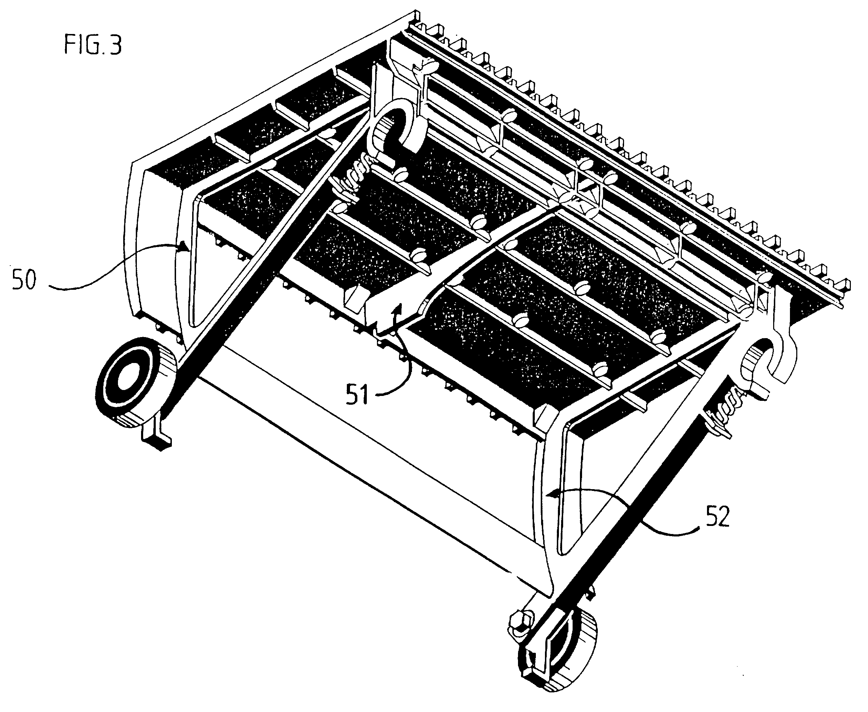

Figure 3 shows such a modified escalator step from behind the step itself, and shows how triangular supporting member 51 has been removed in the process of cutting-away the window portion of the riser. Preferably triangular supporting members 50 and 52 are left intact, while member 51 is partially removed to allow an unobstructed rear access to the riser 25.

A backing plate 13 as shown in figure 4 is formed substantially corresponding to the radius of the riser face. In the present example, three millimetre aluminium plate is used for the backing plate, and this is preferred because it provides an appropriate level of strength for the escalator step as a whole, and meets appropriate safety standards in relation to the OTIS ™ UB step (600 millimetres). Preferably the dimensions of the plate are such that there is an overlap with all rear edges of the riser window portion, so that the backing plate may be suitably affixed to the rear of the riser.

The backing plate 13 is securely affixed to the rear of the riser using appropriate fasteners. In the present examples a series of counter-sunk, vibration proof screws 40 along the upper and lower edges of the backing plate, and the sides of the backing plate are spot "MIG" welded preferably to triangular support members 50 and 52.

Preferably a support member 51A is restored to the remnant of the original member 51 and the backing plate 13. This is so as to provide additional support for the escalator step as a whole. In the present case three millimetre aluminium plate 51A has been "MIG" welded to remnant 51 and the backing plate. The "MIG" welds 41 are provided on both sides of restored member.

Preferably before the backing plate is affixed to the rear of the riser, a bead of silicon or other suitable sealing material is applied to the front surface of the backing plate substantially around its perimeter. This is to minimise any "rattle" noise between the backing plate and riser when the backing plate has been affixed to the riser using appropriate fasteners.

It will be appreciated that the present example is given in relation to a 600 millimetre UB step, and this is the smallest step in the UB range. Wider steps are similar in design, but feature more triangular supporting members at the rear of the riser.

To modify wider UB steps, preferably the window in the riser is machined so as to leave at least two outer triangular supporting members intact, with all intervening triangular supporting members being removed and restored as described above.

When modifying the steps of other escalator models, the principles outlined above should remain the same. It will be appreciated that some variations in the engineering techniques may be necessary in order to accommodate the design characteristics of each model of step.

Even if the riser has no cleats, and it appears that on some escalators they do not, some adaptation by machining or other suitable process may well be necessary to allow placement of the sign and its cover.

In the present example, the modified escalator step, complete with cover plate, weighs approximately 300 grams more than an original step.

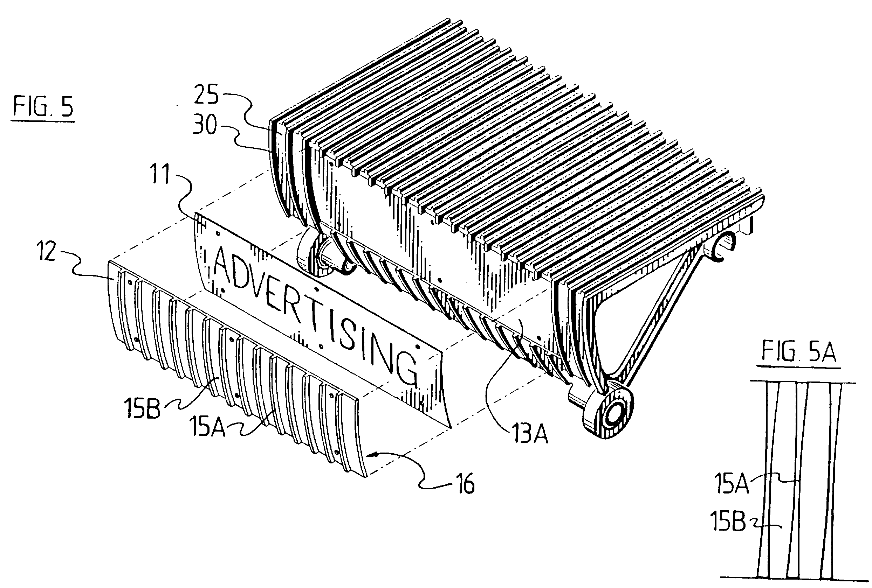

Figure 5 shows how a sign 11 and cover plate 12 might be attached to the modified riser 25 (that is modified as described above) of an escalator step.

Preferably sign 11 would be supported by the restored backing plate 13. Surface 13A would define a recess into which the sign can be placed. Preferably the sign would be flexible, so as to accommodate the contour of the backing surface. The sign could be made of plastic or some other appropriate flexible material. Preferably the sign would bear indicia.

Preferably the sign is secured to the riser in such a way that it can also be conveniently detached if necessary. An appropriate method of achieving this would be to preferably secure the sign by way of a detachable cover plate 12. The use of such a cover plate would also be a convenient way of protecting the sign from normal wear and tear either from the movement of the escalator itself or from the escalator passengers. Passengers and pushchairs etc easily scuff the riser surface and if the sign is not protected in some way from this, it will probably deteriorate rapidly. Furthermore children on escalators cannot help but kick such signs and test their removability, hence some form of protection for the sign is most preferable.

Preferably the cover plate 12 would be transparent, preferably with a hard wearing non-scratch surface. We prefer to use a polycarbonate material such as perspex for the cover plate because this material is specified as zero fire rated and shatter-proof. However cover plates made from other suitable materials may also be used. For example, toughened glass or an appropriate resin material may also be suitable for this purpose.

Preferably the cover plate would be attached to the riser by means of an arrangement which would be tamper-proof while the escalator is moving. In this case stainless steel screws are used and counter sunk into the cover plate. These screws feature a tamper-proof "snake eye" head, and are fastened into vibration proof "BINX" type nuts which are preferably permanently affixed to the rear of the backing plate by an adhesive means. It is preferred to affix the nuts in this way to the rear of the backing plate so as to simplify installation of the cover plate. When a modified escalator step is installed in the escalator, access to the rear of the riser is impossible from the front of the riser, and therefore having an adhesively backed nut affixed to the rear of the backing plate allows a screw to be screwed into the nut from the front of the riser. In this way, one person can easily change the advertising signs on the steps of the escalator, without the need to access the rear of the riser.

The cover plate can be manufactured from known moulding techniques, such as injection moulding, vacuum forming (press moulding) or the like. In cases where the riser has no cleats, moulding of the cover plate would be a relatively simple exercise.

In moulding cover plates for modern escalators which have reasonably thick cleats on the riser, vacuum moulding which presses plastics material into the required shape would be preferred over injection moulding because the former provides better optics. A mould formed by pressing a length of plastics into the shape of the appropriate cover plate provides an undulated cover plate having substantially the same thickness of plastics at the front of the cleats 15A as at the intervening grooves 15B between each cleat. In the present example the thickness of the pressed coverplate is approximately two to three millimetres. In comparison, an injection moulded cover plate would be approximately 7 - 8 millimetres thick for each cleat and the intervening grooves would be approximately 2 - 3 millimetres thick. This gives a less preferred optical arrangement because diffraction in the injection moulded plate is greater.

In cases where the riser comprises a relatively thin series of cleats, injection moulding would be more preferred, because the width of the cleats may be too small to practically press plastics material into a commercially worthwhile cover plate.

The preferred method of attaching the cover plate to the riser comes about from cutting the initial window portion in the riser. The escalator step is placed tread down on a work surface and an appropriate cutting saw cuts into the riser face at level "A", as shown in Figure 9C, making a 90° cut through the required number of cleats, if any. The level of the cutting saw is then raised and a corresponding cut is made near the bottom of the riser at the level marked "B", however, because of the curvature of the riser face, the cut made at level "B" is in fact substantially 60° to the cleats. Figure 9C illustrates a side view of the interface between the riser and the coverplate showing the 60° cut into the riser surface at "B". This type of cut is most preferred because it makes machining and modifying the escalator step simpler, avoiding the need to lever the step up into position so that a 90° cut can be made at level B corresponding to the 90° cut at level "A".

Furthermore, the advantage of this method is that the cover and sign can be dropped into place by a serviceperson and held loosely in the recess shown in the drawings, leaving the serviceperson's hands free to pick up tools and appropriate fasteners. Then the cover plate and sign can be pushed back against the backing plate and secured into place using the fasteners. In comparison, if you make a 90° cut in the top and bottom of the window portion, the serviceperson has to hold the sign and the cover plate against the backing surface while he or she gathers up fasteners and tools, otherwise if the serviceperson lets the cover plate and sign go both will fall onto the tread below, there being a risk that the sign could slip through a gap between adjacent escalator steps into the internal workings of the escalator. Furthermore, using screws to fasten the cover plate to the backing plate along the top edge of the cover plate only, means that if the fasteners fall out, they are most likely to fall onto the tread of the adjacent step below. If fasteners were used along the bottom edge of the cover plate, it would be more likely that any screws which fall could get caught between the adjacent escalator steps.

Preferably the cover plate would be moulded so as to mimic the existing cleats and grooves on the riser, as shown in figure 5. It would also be preferable for the shape of the back face 16 of the cover to substantially match the backing surface 13A of the modified riser.

It would be preferable for the dimensions of the moulded cleats, to vary from the dimensions of the original cleats on the riser. It would also be preferable for the moulded cleats to be slightly narrower than the original cleats to prevent or reduce wear on the cover plate by the teeth on the rear of the adjacent step.

Preferably all edges of the cover plate are designed to be a flush fit with the modified step. Figure 5A shows in an exaggerated front view how cleats on the cover plate should preferably taper in width and depth so that the cover plate cannot be substantially scuffed by the teeth of an adjacent escalator step. In the present case, the cleats on the cover plate would taper by approximately 0.25 millimeters in width and depth.

Preferably not all the cleats on the riser would be removed. Figure 5 shows a preferred cleat pattern after an area on the riser has been machined. These remaining cleats help prevent objects from falling between the riser and the back edge of the adjacent escalator step. Furthermore the cleats on either side of the sign provide stability for the escalator step, preferably reducing any sloppy sideways movement of the step while the escalator is moving, and acting as a guiding mechanism for entry of the steps under the comb device situated at the top and bottom of the escalator. Furthermore these remaining cleats, by guiding the step in relation to the adjacent step on the escalator, possibly prevent damage to the cover plate and/or sign by the teeth on the rear of the adjacent step.

In another preferred form, the invention provides a method for modifying the existing steps in an escalator. Preferably this would involve either modifying a replacement step or, while servicing the machine, modifying an existing step. Preferably an area on the riser and/or the tread would be machined and/or replaced to provide a substantially planar recessed backing surface, preferably leaving a number of surrounding cleats on either side of said planar surface. Preferably the artwork would be prepared and a cover plate made. Preferably the artwork would be placed in to the recess on the riser and/or the tread, or alternatively into a recess in the back of the cover plate. Preferably the sign and cover plate would be attached to the machined step by appropriate fasteners. Preferably the cover plate and sign would be detachable.

In yet another preferred form, the invention provides a method of manufacturing new steps for a new escalator. Preferably this would involve moulding a new escalator step, preferably having an area of the tread and/or the riser without cleats so as to attach a sign and/or cover plate to the appropriate surface. The escalator step could be manufactured from metal, however it may also be appropriate to mould a new escalator step in part or completely from a transparent or translucent material.

The illustrated embodiment is intended for commercial advertising on escalator steps. In particular, modified escalator steps of the type illustrated in this example may be used to advertise retail outlets in multi-level buildings.

### VARIATIONS

Clearly the most preferred forms of the invention are merely examples of how an area of an escalator step may be adapted to convey information to passengers on an escalator, or persons standing at the entrance to or exit from an escalator.

The following then are possible variations to what has already been described:

Although the sign is shown in the preferred embodiment as being placed into a recess on the riser, alternatively the sign might be fitted into a recess on the tread or the riser and tread of an escalator step.

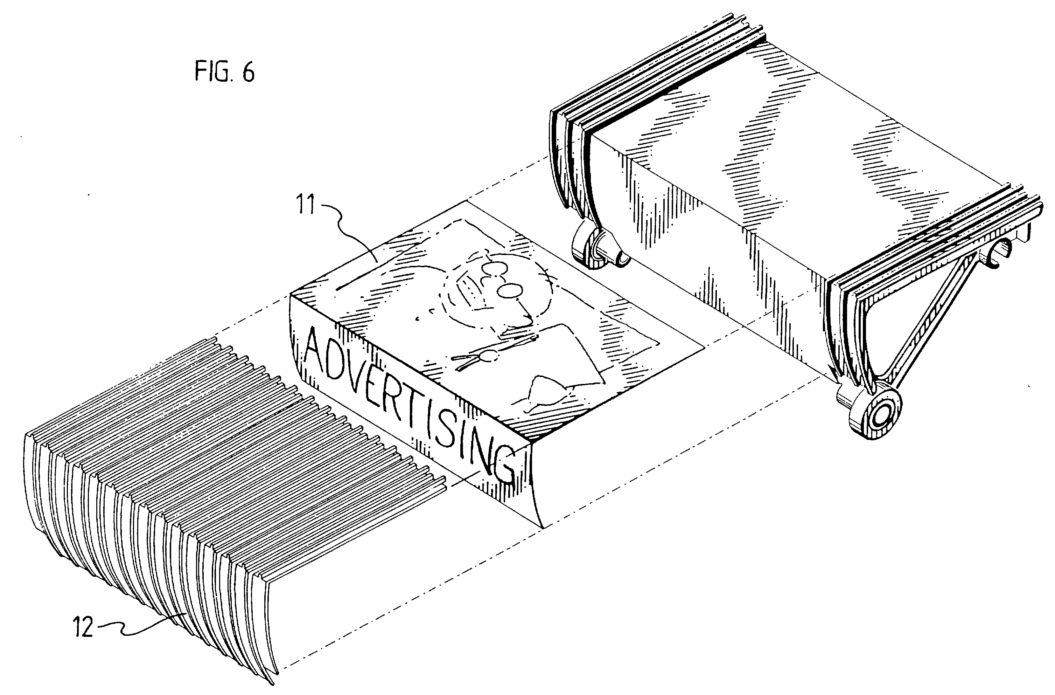

Figure 6 shows how an area of the tread and riser of an escalator step may be modified, preferably by machining away an area of the cleat pattern so as to allow the fitting of either two separate signs or a sign which can be bent around a corner. In contrast to the previous description it would be preferable to remove the full length of the cleats involved and not part thereof as shown in figures 2 and 5. This is preferable because it would be more economic and efficient for the teeth on the moulded cover plate to substantially match the moulded cleat pattern for each adjacent riser. Preferably the cover plate would be moulded in one piece, although it would also be possible to have a separate riser cover and tread cover if necessary. Preferably the cover(s) would be attached to the step with tamper-proof fastening arrangement.

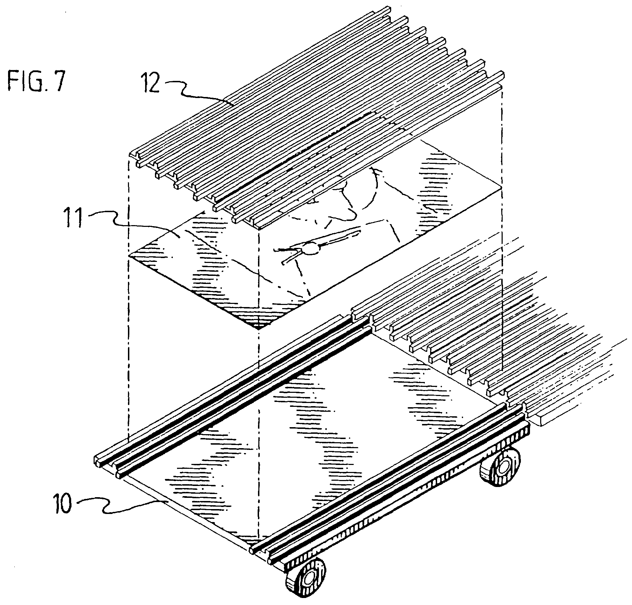

It will be apparent that adaptation of the tread alone on an escalator step is an alternative. This would also have direct application to the step of a travelator, which we described earlier as having a tread portion only and not a riser portion. Figure 7 shows how an area of the tread of a travelator could be machined so as to allow a sign and preferably a cover plate to be fitted into the machined recess or onto a recess created by a restored backing plate.

Furthermore, because not all escalator steps are of the same width, it may be preferable to mould cover plates in small sections, preferably about 4 inches wide. This would allow variation of the width of the sign to suit either the width of the particular escalator step or the advertisers requirements, and would possibly remove the requirement to mould a set of cover plates for each different width escalator of a given profile.

It would be preferable that adjoining cover plates would meet on a line midway between the partly machined cleats shown on the riser in figure 1, or, in the case where those cleats have also been machined away, as shown in figures 5, 6 and 7 the cover plates would preferably adjoin in line with the corresponding teeth on the back edge of the adjacent step.

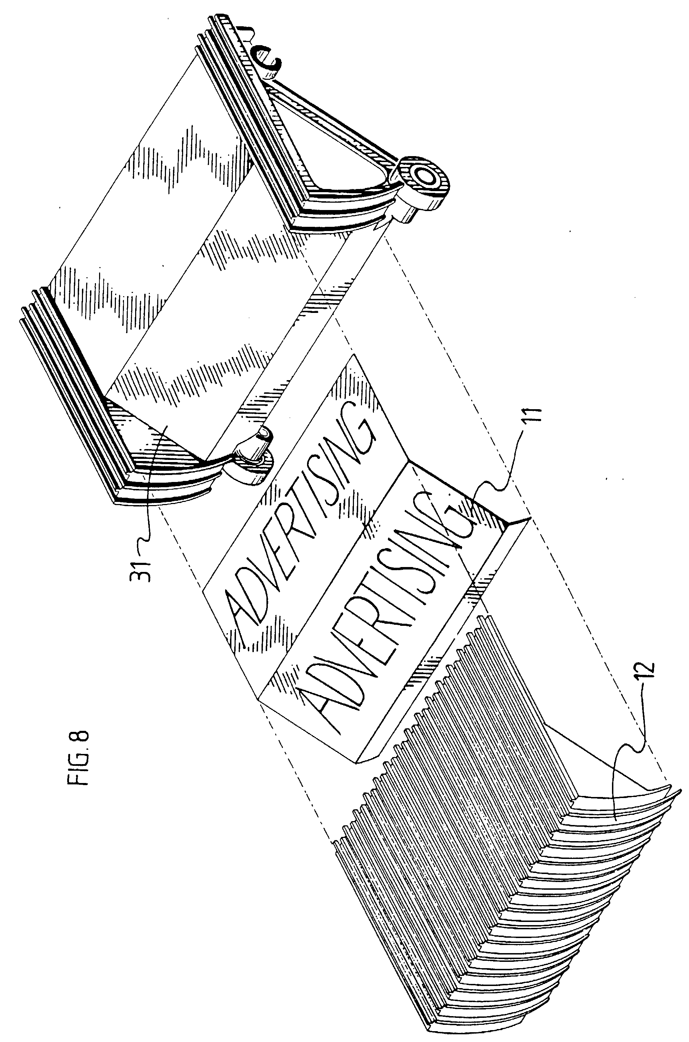

Figure 8 shows an escalator step with a bevelled surface 31 between the riser and the tread. This bevelled surface could be utilised to attach a sign, however this would appear to be less preferable than using the existing riser and tread surfaces. Preferably the cover plate would be manufactured from a moulded transparent or translucent material, probably of a sufficient thickness so as to re-establish the original shape of the step before it was machined.

Other alternatives may include fitting the sign into a recess in the back face 16 of the cover or even permanently securing the sign onto the riser and/or tread perhaps using a transparent resin or some other appropriate material. The tread and/or riser surface would need to be machined so as to allow for the thickness of the resin. This latter method however appears to be less preferable because sealing the sign onto the surface would probably be too permanent and not allow easy access to the sign. Therefore a convenient method of changing the advertising signs is most preferable.

Furthermore the sign 11 may not necessarily be separable from the cover 12 but could form part of the cover itself. For instance, indicia could be incorporated within a moulded cover or inscribed onto the front or back surface of the cover. It would be less preferable for the indicia to be on he front surface of the cover, especially if those markings were exposed to the wear and tear of escalator traffic and movement.

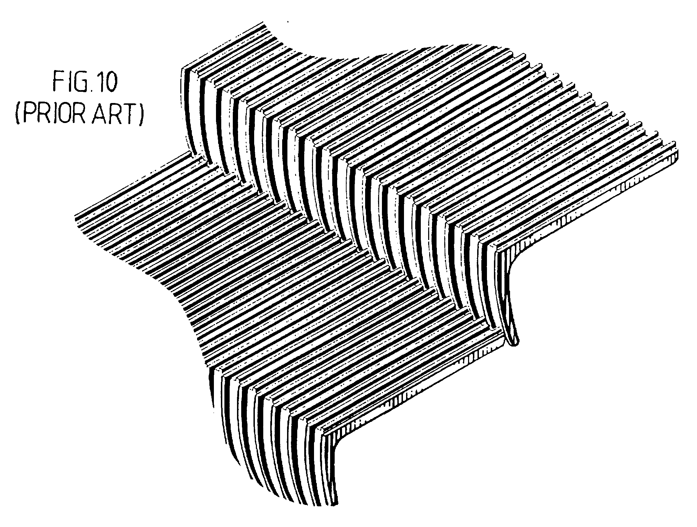

Although providing a cover plate which mimics the existing cleats on the riser appears to be more preferable, other alternatives may exist. For instance a cover plate with a flat front surface could be used although it would be preferable to then adapt the cleats pattern or teeth at the back edge of the adjacent step so as to complement the shape of the cover plate, thereby also preventing objects from falling in between the sign and the neighbouring step. Figure 10 illustrates the complementary cleats and teeth of adjacent steps.

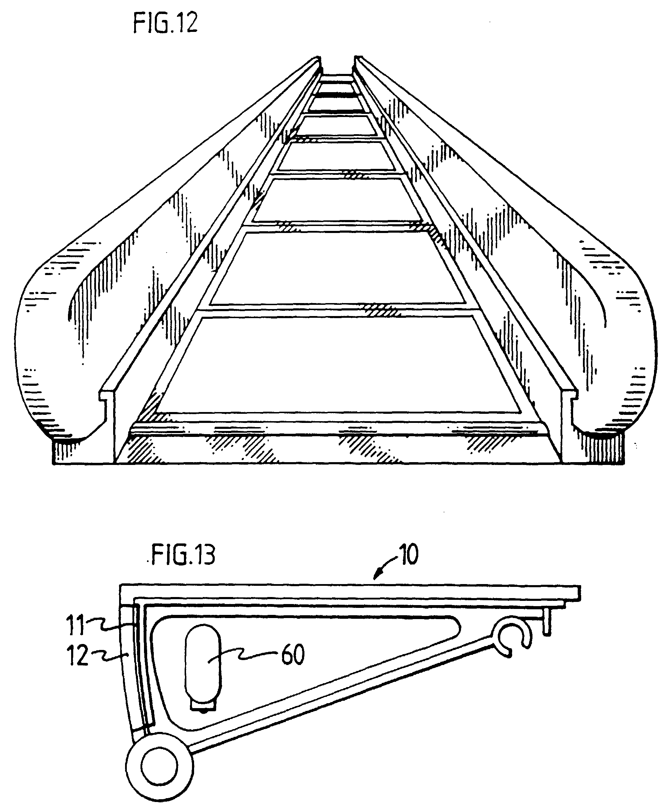

Other possible variations would include using apertures in the riser or tread so as to allow illumination of the indicia, for example back-lit or edge-illuminated perspex. Furthermore there could be a concealed light source 60 in the tread or the riser or even beneath the step, as shown in figure 12, if the step was of a transparent or translucent material itself. In that case indicia could be moulded on to the surface of the removable cover plate, and the cover plate could be made from cast aluminium, perspex or some other suitable material, so that the actual surface of the cover provides the message. Nevertheless this appears to be less preferable than using a transparent cover plate which protects the indicia from wear and tear.

Examples of possible light sources could include LEDs, LCDs or other light box messages, either permanent or transient.

### ADVANTAGES

It will be apparent that there are a number of advantages of the preferred embodiments. Firstly these embodiments are of importance to escalator manufacturers and may be employed at the stage of manufacture to produce a new kind of escalator step. Furthermore they may be used to modify existing escalator steps. The latter is of significant advantage to the owners of existing escalators in that it is not necessary to purchase new escalator steps, but instead existing steps can be easily and economically adapted to accommodate advertising signs.

## Claims

1. A step (5) for an escalator having a plurality of interacting movable steps each having a defined external profile, said step (5) having a tread (10), a riser (25), said defined external profile, and means for displaying a sign (11), characterised in that said means for displaying the sign (11) comprises a receiving portion (13A) which is provided in a portion of said step and which has a base (13), side walls and an open front remote from said base (13); and a transparent or translucent cover plate (12) which closes the open front of said receiving portion, and which has an external profile corresponding to the defined external profile of said step (5).

2. A step as claimed in claim 1, characterised in that said receiving portion is formed on the riser (25) of said step (5).

3. A step as claimed in claim 1 or claim 2, characterised in that the receiving portion (13A) is formed by providing a through hole (6) in said step (5) and then closing said through hole (6) with said base (13).

4. A step as claimed in claim 1 or claim 2, characterised in that the receiving portion (6) is formed as a machined recess.

5. A step as claimed in any one of the preceding claims, characterised in that said transparent or translucent cover plate (12) is removably attached to said step (5).

6. A step as claimed in any one of the preceding claims, characterised in that it includes the sign (11).

7. A step as claimed in claim 6, characterised in that the sign (11) is held in place between said base (13) and said transparent or translucent cover plate (12).

8. An escalator having a plurality of interacting movable steps, characterised in that it has at least one of the steps as claimed in any one of the preceding claims.

9. An escalator as claimed in claim 8, characterised in that all of the steps are as claimed in any one of claim 1 - 7.

10. A method of changing a sign (11) on a step as claimed in claim 5, characterised in that the method comprises removing the cover plate (12), removing an existing sign (11), fitting a new sign (11) in said receiving portion (13), and re-attaching said cover plate (12) over the new sign (11).

11. A method of manufacturing a step as claimed in claim 1, said method comprising molding a new step with a recess formed in a portion of the riser for receiving a sign and removably fixing the transparent or translucent cover (12) to said step (5).

12. A method of manufacturing a step as claimed in claim 3, characterised in that the method comprises modifying an existing step by machining away an area of the step to form a through hole, fixing a backing plate as the base (13) to support members (50, 51, 52) so as to close the through hole, and attaching the transparent or translucent cover (12) to said step (5).

13. A method as claimed in claim 11 or claim 12, characterised in that the method further includes fitting the sign (11) prior to the attachment of said transparent or translucent cover (12) to said step (5).

14. A method of manufacturing a step as claimed in claim 4, said method comprising modifying an existing step by machining away an area of the step to form a recess for receiving a sign and attaching the transparent or translucent cover (12) to said step (5).

## Patentansprüche

1. Stufe (5) für eine Fahrtreppe mit einer Vielzahl von in Wirkverbindung stehenden, beweglichen Stufen, von denen jede ein definiertes äußeres Profil aufweist, wobei die Stufe (5) eine Trittfläche (10), eine Stichfläche (25), das definierte äußere Profil und Mittel zur Anzeige eines Schildes (11) umfaßt, **dadurch gekennzeichnet**, daß das Mittel zur Anzeige des Schildes (11) einen Aufnahmeabschnitt (13A)umfaßt, der in einem Abschnitt der Stufe vorgesehen ist und der eine Stirnplatte (13), Seitenwände und eine von der Stirnplatte (13) beabstandete offene Front aufweist, sowie eine durchsichtige oder durchscheinende Abdeckplatte (12), die die offene Front des Aufnahmeabschnitts abdeckt und die ein äußeres Profil, das dem definierten äußeren Profil der Stufe (5) entspricht, aufweist.

2. Stufe nach Anspruch 1, **dadurch gekennzeichnet**, daß der Aufnahmeabschnitt an der Stichfläche (25) der Stufe (5) ausgebildet ist.

3. Stufe nach Anspruch 1 oder 2, **dadurch gekennzeichnet**, daß der Aufnahmeabschnitt (13A) durch das Einbringen eines Durchgangslochs (6) in die Stufe (5) und durch nachfolgendes Abdecken des Durchgangslochs (6) mit der Stirnplatte (13) gebildet wird.

4. Stufe nach Anspruch 1 oder 2, **dadurch gekennzeichnet**, daß der Aufnahmeabschnitt (6) als maschinell gefertigte Ausnehmung ausgebildet ist.

5. Stufe nach einem der vorhergehenden Ansprüche, **dadurch gekennzeichnet**, daß die durchsichtige oder durchscheinende Abdeckplatte (12) an der Stufe (5) entfernbar angebracht ist.

6. Stufe nach einem der vorhergehenden Ansprüche, **dadurch gekennzeichnet**, daß die Stufe das Schild (11) umfaßt.

7. Stufe nach Anspruch 6, **dadurch gekennzeichnet**, daß das Schild (11) zwischen der Stirnplatte (13) und der durchsichtigen oder durchscheinenden Abdeckplatte (12) festgehalten wird.

8. Fahrtreppe mit einer Vielzahl von in Wirkverbindung stehenden, beweglichen Stufen, **dadurch gekennzeichnet**, daß sie mindestens eine Stufe nach einem der vorhergehenden Ansprüche aufweist.

9. Fahrtreppe nach Anspruch 8, **dadurch gekennzeichnet**, daß alle Stufen nach einem der Ansprüche 1 bis 7 ausgebildet sind.

10. Verfahren zum Auswechseln eines Schildes (11) auf einer Stufe nach Anspruch 5, **dadurch gekennzeichnet**, daß das Verfahren das Entfernen der Abdeckplatte (12), das Entfernen des vorhandenen Schildes (11), das Einpassen eines neuen Schildes (11) in den Aufnahmeabschnitt (13) und das Wiederanbringen der Abdeckplatte (12) über dem neuen Schild (11) umfaßt.

11. Verfahren zur Herstellung einer Stufe nach Anspruch 1, wobei das Verfahren das Gießen einer neuen Stufe mit einer in einem Abschnitt der Stichfläche ausgebildeten Ausnehmung zur Aufnahme eines Schildes und das lösbare Verbinden der durchsichtigen oder durchscheinenden Abdeckplatte (12) mit der Stufe (5) umfaßt.

12. Verfahren zur Herstellung einer Stufe nacn Anspruch 3, **dadurch gekennzeichnet**, daß das Verfahren die Umgestaltung einer vorhandenen Stufe durch maschinelles Entfernen eines Bereichs der Stufe zur Ausbildung eines Durchgangslochs, das Verbinden einer als Stirnplatte (13) dienenden Spannplatte mit Stützteilen (50,51,52) zum Abdecken des Durchgangslochs und das Anbringen der durchsichtigen oder durchscheinenden Abdeckplatte (12) an der Stufe (5) umfaßt.

13. Verfahren nach Anspruch 11 oder 12, **dadurch gekennzeichnet**, daß das Verfahren des weiteren das Einpassen des Schildes (11) vor dem Anbringen der durchsichtigen oder durchscheinenden Abdeckplatte (12) an der Stufe (5) umfaßt.

14. Verfahren zur Herstellung einer Stufe nach Anspruch 4, wobei das Verfahren die Umgestaltung einer vorhandenen Stufe durch das maschinelle Entfernen eines Bereichs der Stufe zur Ausbildung einer Ausnehmung zur Aufnahme eines Schildes und das Anbringen der durchsichtigen oder durchscheinenden Abdeckplatte (12) an der Stufe (5) umfaßt.

## Revendications

1. Marche (5) pour un escalator présentant plusieurs marches mobiles en interaction qui présentent chacune un profil externe défini, ladite marche (5) présentant une surface de marche (10), une contre-marche (25), ledit profil externe défini et un moyen pour afficher une affiche (11), caractérisé en ce que ledit moyen pour afficher l'affiche (11) comporte une partie de réception (13A) qui est prévue dans une partie de ladite marche et qui présente une base (13), des parois latérales et un front ouvert espacé de ladite base (13); et une plaque de couverture (12) transparente ou translucide qui ferme le front ouvert de ladite partie de réception et qui présente un profil externe correspondant au profil externe défini de ladite marche (5).

2. Marche selon la revendication 1, caractérisée en ce que ladite partie de réception est formée sur la contre-marche (25) de ladite marche (5).

3. Marche selon la revendication 1 ou la revendication 2, caractérisée en ce que la partie de réception (13A) est formée en formant un trou (6) qui traverse ladite marche (5) et en fermant ensuite ledit trou (6) par ladite base (13).

4. Marche selon la revendication 1 ou la revendication 2, caractérisée en ce que la partie de réception (6) est formée par un creux usiné.

5. Marche selon l'une quelconque des revendications précédentes, caractérisée en ce que ladite plaque de couverture (12) transparente ou translucide est fixée de manière détachable à ladite marche (5).

6. Marche selon l'une quelconque des revendications précédentes, caractérisée en ce qu'elle comporte l'affiche (11).

7. Marche selon la revendication 6, caractérisée en ce que l'affiche (11) est maintenue en place entre ladite base (13) et ladite plaque de couverture (12) transparente ou translucide.

8. Escalator présentant plusieurs marches mobiles en interaction, caractérisé en ce qu'au moins l'une de ses marches est selon l'une quelconque des revendications précédentes.

9. Escalator selon la revendication 8, caractérisé en ce que toutes ses marches sont selon l'une quelconque des revendications 1 à 7.

10. Procédé de changement d'une affiche (11) sur une marche selon la revendication 5, caractérisé en ce que le procédé comporte les étapes consistant à enlever la plaque de couverture (12), à enlever une affiche (11) existante, à installer une nouvelle affiche (11) dans ladite partie de réception (13) et à refixer ladite plaque de couverture (12) sur la nouvelle affiche (11).

11. Procédé de fabrication d'une marche selon la revendication 1, ledit procédé comportant les opérations consistant à mouler une nouvelle marche avec un creux formé dans une partie de la contre-marche pour recevoir une affiche, et à fixer de manière libérale la couverture (12) transparente ou translucide sur ladite marche (5).

12. Procédé de fabrication d'une marche selon la revendication 3, caractérisé en ce que le procédé comporte les étapes consistant à modifier une marche existante en enlevant par usinage une zone de la marche en vue de la traverser par un trou, à fixer une plaque de dos servant de base (13) sur des éléments de soutien (50, 51, 52) de manière à fermer le trou, et à fixer la couverture (12) transparente ou translucide sur ladite marche (5).

13. Procédé selon la revendication 11 ou la revendication 12, caractérisé en ce que le procédé comporte en outre l'étape consistant à installer l'affiche (11) avant de fixer ladite couverture (12) transparente ou translucide sur ladite marche (5).

14. Procédé de fabrication d'une marche selon la revendication 4, ledit procédé comportant les étapes consistant à modifier une marche existante en enlevant par usinage une zone de la marche en vue de former un creux destiné à recevoir une affiche, et à fixer la couverture (12) transparente ou translucide sur ladite marche (5).
